# EUROPEAN PATENT APPLICATION

(11) **EP 1 942 143 A1**
(43) Date of publication of application: **09.07.2008**
(21) Application number: 06822029.2
(22) Date of filing: 23.10.2006
(51) Int. Cl.: C08L 67/00, C08K 5/10, C08K 5/14, C08L 101/16

(54) **POLYESTER RESIN COMPOSITION AND MOLDED BODY USING SAME**

(30) Priority: 25.10.2005 JP 2005309939
(71) Applicant: UNITIKA LTD., Amagasaki-shi Hyogo 660-0824 (JP)
(72) Inventor: KAMIKAWA, Hiroo c/o UNITIKA LTD., Kyoto 611-0021 (JP); KABASHIMA, Yohei c/o UNITIKA LTD., Kyoto 611-0021 (JP)
(74) Representative: Pautex Schneider, Nicole Véronique
(86) International application number: PCT/JP2006/321008
(87) International publication number: WO 2007/049529

(57) **Abstract**

A polyester resin composition and a product produced from the polyester resin composition are provided. The polyester resin composition is prepared from a material comprising 100 parts by mass of a resin compound containing 90 to 99.5% by mass of a biodegradable polyester resin and 10 to 0.5% by mass of a plasticizer, and 0.01 to 10 parts by mass of a peroxide. Further, 0.01 to 5 parts by mass of a crosslinking assist agent may be blended in the polyester resin composition. The biodegradable polyester resin preferably mainly contains a polylactic acid, and the crosslinking assist agent is preferably a (meth)acrylate compound.

## Description

### TECHNICAL FIELD

The present invention relates to a polyester resin composition which is excellent in mechanical strength, heat resistance and moldability and less dependent upon petroleum resources with a lower environmental load, and to a product molded or formed from the resin composition.

### BACKGROUND ART

In general, polypropylenes (PP), acrylonitrile-butadiene-styrene copolymer resins (ABS), polyamides (PA6, PA66), polyesters (PET, PBT), polycarbonates (PC) and the like are used as materials for resin molded products. Although products produced from these resins are excellent in moldability and mechanical strength, these resin products lead to an increased amount of garbage when being discarded. In addition, the resin products are hardly decomposed in the natural environment, so that the resin products semipermanently remain in the ground after landfill disposal. Further, these resins are prepared by employing petroleum as a starting material and, therefore, exert greater environmental loads in their entire life cycles.

In recent years, biodegradable polyester resins, such as polylactic acid, prepared from plant-based materials have come into focus from the viewpoint of environmental preservation. Among these resins, the polylactic acid is one of the most heat-resistant resins, and is mass-producible. Therefore, the polylactic acid is less expensive and very useful. Further, the polylactic acid can be produced from plants such as corn and sweet potato, thereby saving exhaustible resources such as petroleum.

Even the polylactic acid, which is the most heat resistant among the biodegradable polyester resins produced from the plant-based materials, is poorer in heat resistance than ABS and aromatic polyesters if having a lower crystallinity. Therefore, the polylactic acid is still unsatisfactory in heat resistance for practical applications. In general, in-door applications require a heat resistant temperature of 50 to 70°C, and automotive applications require a heat resistant temperature of 90°C. In consideration of safety during use, durability at an atmosphere temperature of 100°C is practically required.

The polylactic acid is a crystalline resin, but has a lower crystallization speed. Therefore, the polylactic acid is not sufficiently crystallized within a period equivalent to a mold cooling period employed for injection molding of a general-purpose plastic such as the aforementioned PP. In this case, the heat resistant temperature is about 60°C. In order to increase the crystallinity of the polylactic acid for improvement of the heat resistance of the polylactic acid, the crystallization speed in the molding is increased by adding a crystal seeding agent such as talc to the polylactic acid as disclosed, for example, in JP-A-7(1995)-109413. Even in this case, a longer mold cooling period is required for the crystallization.

On the other hand, JP-A-11(1999)-140292 proposes that a crosslinked structure is introduced into the polylactic acid by blending a crosslinking agent such as a peroxide and a crosslinking assist agent such as an acrylate in the polylactic acid to increase the heat resistance of the polylactic acid. This method is still unsatisfactory for reduction in molding cycle.

### DISCLOSURE OF THE INVENTION

### PROBLEMS TO BE SOLVED BY THE INVENTION

To solve the aforementioned problems, it is a technical object of the present invention to substantially improve the heat resistance of a biodegradable polyester resin, particularly a polylactic acid, by increasing the crystallization speed of the biodegradable polyester resin, and to reduce the molding cycle time required for molding the biodegradable polyester resin to facilitate the molding.

### MEANS FOR SOLVING THE PROBLEMS

To achieve the aforementioned object, the inventors of the present invention conducted intensive studies. As a result, the inventors found that the object is achieved by a resin composition prepared by blending a plasticizer and a peroxide in a biodegradable polyester resin, and attained the present invention.

The present invention has the following features.
(1) A polyester resin composition is prepared from a material comprising 100 parts by mass of a resin compound containing 90 to 99.5% by mass of a biodegradable polyester resin and 10 to 0.5% by mass of a plasticizer, and 0.01 to 10 parts by mass of a peroxide.
(2) In the polyester resin composition (1), the material further comprises 0.01 to 5 parts by mass of a crosslinking assist agent.
(3) In the polyester resin composition (1) or (2), the biodegradable polyester resin mainly comprises a polylactic acid.
(4) In any of the polyester resin compositions (1) to (3), the plasticizer is at least one compound selected from the group consisting of an aliphatic polycarboxylate derivative, an aliphatic polyalcohol ester derivative, an aliphatic oxyester derivative, an aliphatic polyether derivative and an aliphatic polyether polycarboxylate derivative.
(5) In any of the polyester resin compositions (2) to (4), the crosslinking assist agent is a (meth)acrylate compound.
(6) In any of the polyester resin compositions (1) to (5), the biodegradable polyester resin is a biodegradable polyester resin prepared from a plant-based material.
(7) A product produced from any of the polyester resin compositions (1) to (6).

### EFFECTS OF THE INVENTION

According to the present invention, the polyester resin composition is provided, which is excellent in heat resistance and moldability and exerts a lower environmental load. The product of the resin composition is produced by injection molding or the like. Where the biodegradable polyester resin is prepared from the plant-based material, exhaustible resources such as petroleum can be saved. Therefore, the present invention has a very high industrial value.

### BEST MODE FOR CARRYING OUT THE INVENTION

The present invention will hereinafter be described in detail.

A polyester resin composition according to the present invention is prepared from a material comprising a biodegradable polyester resin, a plasticizer and a peroxide. The material for the inventive polyester resin composition preferably further comprises a crosslinking assist agent.

Examples of the biodegradable polyester resin to be used in the present invention include poly(L-lactic acid), poly(D-lactic acid), polyglycolic acid, polycaprolactone, polybutylene succinate, polyethylene succinate, polybutylene adipate terephthalate and polybutylene succinate terephthalate, which may be used in combination. From the viewpoint of the saving of the petroleum resources, a plant-based material is preferably employed. Particularly, the poly(L-lactic acid), the poly(D-lactic acid) and a mixture and a copolymer of the poly(L-lactic acid) and the poly(D-lactic acid) are preferred in terms of heat resistance and moldability. From the viewpoint of biodegradability, the poly (L-lactic acid) is preferably employed as a major component of the biodegradable polyester resin.

The melting point of a polylactic acid resin mainly containing the poly(L-lactic acid) varies depending on the content of D-lactic acid. In consideration of the mechanical characteristic and the heat resistance of a product molded from the inventive biodegradable polyester resin composition, the melting point of the polylactic acid resin is preferably not lower than 160°C. In order to allow the polylactic acid resin mainly containing the poly(L-lactic acid) to have a melting point not lower than 160°C, the content of the D-lactic acid is preferably less than about 3% by mole.

The biodegradable polyester resin, which is either a single biodegradable polyester resin or a mixture of plural biodegradable polyester resins, preferably has a melt flow rate of 0.1 to 50 g/10 minutes, more preferably 0.2 to 20 g/10 minutes, most preferably 0.5 to 10 g/10 minutes, as measured at 190°C with a load of 21.2 N. If the melt flow rate is greater than 50 g/10 minutes, the melt viscosity is too low, so that the resulting molded product is poorer in mechanical characteristic and heat resistance. On the other hand, if the melt flow rate is less than 0.1 g/10 minutes, a molding load is too high, resulting in poorer operability.

Where the melt flow rate of the biodegradable polyester resin is too high, the melt flow rate may be adjusted within the aforesaid range by increasing the molecular weight of the resin with the use of a small amount of a chain extending agent such as a diisocyanate compound, a bisoxazoline compound, an epoxy compound or an acid anhydride. On the other hand, where the melt flow rate is too low, the adjustment of the melt flow rate may be achieved by adding a biodegradable polyester resin having a greater melt flow rate or a compound having a lower molecular weight.

The biodegradable polyester resin is typically prepared by employing a known melt polymerization method, optionally, in combination with a solid phase polymerization method.

The plasticizer to be used in the present invention is not particularly limited, but a plasticizer highly compatible with the biodegradable polyester resin is preferred. For example, at least one plasticizer selected from the group consisting of aliphatic polycarboxylate derivatives, aliphatic polyalcohol ester derivatives, aliphatic oxyester derivatives, aliphatic polyether derivatives and aliphatic polyether polycarboxylate derivatives is used. Specific examples of the plasticizer include glycerin diacetomonolaurate, glycerin diacetomonocaprate, polyglycerin acetate, dimethyl adipate, dibutyl adipate, triethylene glycol diacetate, methyl acetylrecinolate, acetyl tributylcitrate, polyethylene glycol, dibutyl diglycol succinate, bis(butyl diglycol) adipate and bis(methyl diglycol) adipate. Specific examples of commercially available plasticizers include PL-012, PL-019, PL-320 and PL-710 available from Riken Vitamin Co. , Ltd. , ATBC available from Taoka Chemical Co. , Ltd., and BXA and MXA available from Daihachi Chemical Industry Co., Ltd.

The amount of the plasticizer to be blended should be 0.5 to 10% by mass, preferably 1 to 5% by mass, based on 100% by mass of the total of the biodegradable polyester resin and the plasticizer. If the amount of the plasticizer is less than 0.5% by mass, a heat resistance improving effect is poor. If the amount of the plasticizer is greater than 10% by mass, a product molded from the resulting resin composition has a higher crystallinity, but has a lower heat resistance.

Specific examples of the peroxide to be used in the present invention include benzoyl peroxide, bis(butylperoxy)trimethylcyclohexane, bis(butylperoxy)cyclododecane, butyl bis(butylperoxy) valerate, dicumyl peroxide, butylperoxy benzoate, dibutyl peroxide, bis(butylperoxy)diisopropylbenzene, dimethyldi(butylperoxy)hexane, dimethyldi(butylperoxy)hexyne and butylperoxycumene.

The amount of the peroxide to be blended should be 0.01 to 10 parts by mass, preferably 0.1 to 5 parts by mass, based on 100 parts by mass of the total of the biodegradable polyester resin and the plasticizer. If the amount of the peroxide is less than 0.01 part by mass, the heat resistance improving effect is poor. If the amount of the peroxide is greater than 10 parts by mass, the effect will plateau, resulting in poor economy. The biodegradable polyester resin component is crosslinked by the addition of the peroxide, whereby a product molded from the resulting resin composition is improved in mechanical strength, heat resistance and dimensional stability. The peroxide is decomposed to be consumed when being mixed with the resin. Even if the peroxide is blended in the biodegradable polyester resin composition, the peroxide is often absent in the resulting resin composition. Even in this case, the amount of the peroxide to be blended is within the aforementioned range.

In the present invention, the crosslinking assist agent is preferably blended together with the peroxide serving as the crosslinking agent to increase the crosslinking efficiency. Examples of the crosslinking assist agent include: divinylbenzene, diallylbenzene, divinylnaphthalene, divinylphenyl, divinylcarbazole, divinylpyridine and their nucleus substituted compounds and their homology; multifunctional acrylic compounds such as ethylene glycol diacrylate, butylene glycol diacrylate, triethylene glycol diacrylate, 1,6-hexanediol diacrylate and tetramethylolmethane tetraacrylate; multifunctional methacrylic compounds such as ethylene glycol dimethacrylate, butylene glycol dimethacrylate, triethylene glycol dimethacrylate, tetraethylene glycol dimethacrylate, 1,6-hexanediol dimethacrylate, 1,9-nonanediol dimethacrylate, 1,10-decanediol dimethacrylate, trimethylolpropane trimethacrylate and tetramethylolmethane tetramethacrylate; polyvinyl esters, polyallyl esters and polyacryloyloxyalkyl esters and polymethacryloyloxyalkyl esters of aliphatic and aromatic polycarboxylic acids such as divinyl phthalate, diallyl phthalate, diallyl maleate and bisacryloyloxyethyl terephthalate; polyvinyl ethers and polyallyl ethers of aliphatic and aromatic polyalcohols such as diethylene glycol divinyl ether, hydroquinone divinyl ether and bisphenol-A diallyl ether; allyl esters of cyanuric acid and isocyanuric acid such as triallyl cyanurate and triallyl isocyanurate; triallyl phosphate and trisacryloxyethyl phosphate; maleimide compounds such as N-phenyl maleimide and N,N'-m-phenylene bismaleimide; and multifunctional monomers such as dipropargyl phthalate and dipropargyl maleate each having two or more triple bonds.

Among these crosslinking assist agents, a (meth)acrylate compound is preferably used as the crosslinking assist agent for the crosslinkability. A compound having two or more (meth)acryl groups in its molecule or having one or more (meth)acryl groups and one or more glycidyl groups or vinyl groups in its molecule is preferably used as the (meth)acrylate compound because it is highly reactive with the biodegradable resin with little residual monomer, less toxic and less liable to cause coloration of the resin. Specific examples of such a compound include glycidyl methacrylate, glycidyl acrylate, glycerol dimethacrylate, trimethylolpropane trimethacrylate, trimethylolpropane triacrylate, allyloxypolyethylene glycol monoacrylate, allyloxypolyethylene glycol monomethacrylate, polyethylene glycol dimethacrylate, polyethylene glycol diacrylate, polypropylene glycol dimethacrylate, polypropylene glycol diacrylate, polytetramethylene glycol dimethacrylate, copolymers of alkylene glycols having different alkylene groups in their alkylene glycol portions, butanediol methacrylate and butanediol acrylate.

Where the crosslinking assist agent, preferably the (meth)acrylate compound, is blended, the amount of the crosslinking assist agent is preferably 0.01 to 5 parts by mass, more preferably 0.02 to 3 parts by mass, further more preferably 0.05 to 1 part by mass, based on 100 parts by mass of the total of the biodegradable polyester resin and the plasticizer. If the amount of the crosslinking assist agent is less than 0.01 part by mass, the crosslinking efficiency improving effect is poor. If the amount of the crosslinking assist agent is greater than 5 parts by mass, the molding operability is deteriorated.

An exemplary method for blending the plasticizer, the peroxide and the crosslinking assist agent with the biodegradable polyester resin is a melt-kneading method employing an ordinary extruder. In this case, a twin screw extruder is preferably used for sufficient kneading. The kneading temperature is preferably in the range of (the melting point of the biodegradable polyester resin + 5°C) to (the melting point of the biodegradable polyester resin + 100°C), and the kneading period is preferably 20 seconds to 30 minutes. If the kneading temperature is lower than the aforementioned range or the kneading period is shorter than the aforementioned range, the kneading and the reaction will be insufficient. If the kneading temperature is higher than the aforementioned range or the kneading period is longer than the aforementioned range, the resin is liable to suffer from decomposition and coloration. When the plasticizer is blended with the biodegradable polyester resin, the biodegradable polyester resin and the plasticizer are preferably simultaneously fed into the extruder from a top feeder for homogeneous mixing. On the other hand, the peroxide and the crosslinking assist agent are preferably added to a homogeneous melt mixture of the biodegradable polyester resin and the plasticizer for reaction. Therefore, the peroxide and the crosslinking assist agent are preferably fed from a middle potion of a barrel of the extruder.

A preferred method for feeding the peroxide and the crosslinking assist agent from the middle portion of the barrel is to dissolve or disperse the peroxide and the crosslinking assist agent in a medium and inject the resulting solution or dispersion into a kneader of the extruder. This method significantly improves the operability. More specifically, it is preferred that a solution or a dispersion of the crosslinking assist agent is fed into a melt mixture of the biodegradable polyester resin component, the plasticizer and the peroxide during melt-kneading of the mixture, or that a solution or a dispersion of the peroxide and the crosslinking assist agent is fed into a melt mixture of the biodegradable polyester resin and the plasticizer during melt-kneading of the mixture.

An ordinary medium may be used as the medium in which the peroxide and the crosslinking assist agent are to be dissolved or dispersed, but a plasticizer highly compatible with the biodegradable polyester resin is preferably used as the medium. Any of the aforementioned plasticizers may be used as the medium, as long as the peroxide and the crosslinking assist agent can be dissolved or evenly dispersed therein. Further, two or more types of plasticizers may be used in combination as the medium. The mass ratio of the total of the peroxide and the crosslinking assist agent to the medium is preferably 1:0.5 to 1:20, optimally 1:1 to 1:5.

A pigment, a heat stabilizer, an antioxidant, a weather resistant agent, a light resistant agent, a flame retardant, a plasticizer different from the aforementioned plasticizers, a lubricant, a mold release agent, an antistatic agent, a filler and a crystal seeding agent may be added to the inventive polyester resin composition, as long as the characteristic properties of the polyester resin composition are not impaired.

Examples of the heat stabilizer and the antioxidant include hindered phenols, phosphorus compounds, hindered amines, sulfur compounds, copper compounds, halides of alkali metals and vitamin E.

Usable examples of the flame retardant include halogen flame retardants, phosphorus flame retardants and inorganic flame retardants, among which a halogen-free flame retardant is preferably used from an environmental viewpoint. Examples of the halogen-free flame retardant include phosphorus flame retardants, metal hydrate compounds (aluminum hydroxide and magnesium hydroxide), N-containing compounds (melamine compounds and guanidine compounds) and inorganic compounds (borates and Mo compounds).

Examples of the filler include inorganic fillers and organic fillers.

Examples of the inorganic fillers include talc, calcium carbonate, zinc carbonate, warrastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolites, hydrotalcite, metal fibers, metal whiskers, ceramic whiskers, potassium titanate, boron nitride, graphite and carbon fibers.

Examples of the organic fillers include naturally existing polymers such as starch, cellulose particles, wood powder, bean curd refuse, chaff and wheat bran, and products obtained by modifying any of these polymers.

Examples of the crystal seeding agent include inorganic crystal seeding agents and organic crystal seeding agents. Examples of the inorganic crystal seeding agents include talc and kaolin. Examples of the organic crystal seeding agents include sorbitol compounds, benzoic acid, metal salts of benzoic compounds, metal phosphate salts and rosin compounds. A method for mixing any of these crystal seeding agents with the inventive polyester resin composition is not particularly limited.

The inventive polyester resin composition is molded or formed into a variety of products by injection molding, blowing, extrusion or inflation, or sheet forming followed by vacuum forming, air pressure forming or vacuum air forming. Particularly, the injection molding is preferably employed. An ordinary injection molding method as well as a gas injection molding method and an injection press molding method may be employed. Injection molding conditions suitable for the inventive polyester resin composition are a cylinder temperature of 180 to 240°C, more preferably 190 to 230°C, and a mold temperature of 140°C or lower. If the molding temperature is too low, operational instability such as short molding and overloading are liable to occur. On the other hand, if the molding temperature is too high, the resin composition will be decomposed, so that a product molded from the resin composition is liable to suffer from reduction in strength and colorization.

The heat resistance of the inventive polyester resin composition is improved by promoting the crystallization of the resin.

An exemplary method for promoting the crystallization is to cool the resin composition in a mold during the injection molding. In this case, the mold is desirably cooled at a mold temperature of (the crystallization temperature of the resin composition ± 20°C) for a predetermined period. In consideration of demoldability, the mold temperature may be thereafter further reduced to not higher than the glass transition temperature of the resin composition, followed by demolding of the resulting product.

An exemplary method for promoting the crystallization after the molding is to re-heat the resulting molded product at (the crystallization temperature ± 20°C) . If the resin composition has a plurality of crystallization temperatures, the product may be heat-treated at the respective crystallization temperatures, or one of the crystallization temperatures which ensures the highest heat resistance may be selected. Where the resin composition has a plurality of glass transition temperatures, a glass transition temperature free from any molding problem may be selected.

Specific examples of the molded product include electric appliance resin components such as housings for personal computers, printers, projector lamps, and automotive resin components such as bumpers, interior panels and door trims. Other examples of the molded product include films, sheets and hollow products.

### EXAMPLES

The present invention will hereinafter be described more specifically by way of examples thereof. However, the present invention is not limited to the following examples. Ingredients and physical property evaluation methods employed in the following examples and comparative examples will be described below.

### 1. Evaluation Items

### (1) Melt flow rate (MFR)

The melt flow rate was measured at 1.90°C with a load of 21.2 N in conformity with JIS K-7210 (test conditions 4).

### (2) Distortion temperature under load (DTUL)

The distortion temperature under load was measured with a load of 0.45 MPa in conformity with ASTM D-648. In practice, the distortion temperature under load is preferably not lower than 80°C.

### (3) Molding cooling period

A molding test was performed to mold a dumbbell-shaped test piece by means of an injection molding machine (Model IS-80G available from Toshiba Machine Co., Ltd.) A resin composition was filled at a molding temperature of 190°C in a mold kept at a temperature of 100°C, and then a mold cooling period ensuring proper demoldability was determined for evaluation by progressively extending a cooling period. Where the proper demoldability was not ensured in 100 seconds, the evaluation was not performed by further extending the cooling period. From an economic viewpoint, the mold cooling period is preferably less than 60 seconds.

### 2. Ingredients

### (1) Polylactic acid resin

Nature Works 6201DK available from Cargill Dow Corporation, and having an MFR of 10 g/10 minutes and a melting point of 168°C (hereinafter referred to simply as "PLA")

### (2) Polybutylene succinate resin

GS-P1a AZ-71T available from Mitsubishi Chemical Corporation, and having an MFR of 20 (hereinafter referred to simply as "PBS")

### (3) Plasticizer

Glycerin diacetomonocaprate PL-019 available from Riken Vitamin Co., Ltd.

### (4) Plasticizer

Polyglycerin acetate PL-710 available from Riken Vitamin Co., Ltd.

### (5) Plasticizer

Acetyl tributylcitrate ATBC available from Taoka Chemical Co., Ltd.

### (6) Plasticizer

Bis(butyl diglycol) adipate BXA available from Daihachi Chemical Industry Co., Ltd.

### (7) Peroxide

Di-t-butyl peroxide PERBUTYL D available from Nippon Oil & Fats Co., Ltd.

### (8) Crosslinking assist agent

Polyethylene glycol dimethacrylate BLENMER PDE-50 available from Nippon Oil & Fats Co., Ltd.

### Examples 1 to 8 and Comparative Examples 1 to 5

A biodegradable polyester resin and a plasticizer were fed in amounts shown in "Ingredients fed from top feeder" of Table 1 into a twin screw extruder (Model TEM-37BS available from Toshiba Machine Co., Ltd.) from a top feeder, and the resulting mixture was melt-kneaded at a temperature of 190°C and extruded. At this time, a peroxide, a crosslinking assist agent and a plasticizer were added in amounts shown in "Ingredients fed from middle portion" of Table 1 in the form of a solution mixture from a middle portion of a kneader of the extruder with the use of a pump. The extruded resin was cut into pellets. Thus, a resin composition was prepared.

In turn, the pellets were dried in a vacuum drier at 70°C for 8 hours. Then, a molding test was performed with the use of the pellets to form a dumbbell test piece by means of an injection molding machine (Model IS-80G available from Toshiba Machine Co., Ltd.), and the molding cooling period was evaluated. Further, the distortion temperature under load of a test piece prepared by employing a cooling period of 60 seconds was measured.

The results of the evaluation of the physical properties of the resin compositions prepared in Examples 1 to 8 and Comparative Examples 1 to 5 are shown in Table 1.

**Table 1**

| | | Example | | | | | | | | Comparative Example | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Ingredients (% by mass) fed from top feeder | | | | | | | | | | | | | | |
| Polyester resin | PLA | 95 | 95 | 95 | 95 | 95 | 85 | 99 | 90 | 100 | 99.9 | 80 | 95 | 95 |
| | PBS | | | | | | 10 | | | | | | | |
| Plasticizer | PL-019 | 5 | | | | 5 | 5 | 1 | 10 | | 0.1 | 20 | 5 | 5 |
| | PL-710 | | 5 | | | | | | | | | | | |
| | ATBC | | | 5 | | | | | | | | | | |
| | BXA | | | | 5 | | | | | | | | | |

| Ingredients (part by mass) fed from middle portion | | | | | | | | | | | | | | |
|---|---|---|---|---|---|---|---|---|---|---|---|---|---|---|
| Peroxide | PERBUTYLD | 0.2 | 0.2 | 0.2 | 0.2 | 8 | 0.2 | 0.2 | 0.2 | 0.2 | 0.2 | 0.2 | | |
| Crosslinking assist agent | PDE-50 | 0.1 | 0.1 | 0.1 | 0.1 | | 0.1 | 0.1 | 0.1 | 0.1 | 0.1 | 0.1 | 0.1 | |
| Plasticizer | PL-019 | 0.5 | 0.5 | 0.5 | 0.5 | 1 | 0.5 | 0.5 | 0.5 | 0.5 | 0.5 | 0.5 | 0.5 | |

| Evaluation | | | | | | | | | | | | | | |
|---|---|---|---|---|---|---|---|---|---|---|---|---|---|---|
| Distortion temperature under load (°C) | | 105 | 120 | 96 | 101 | 93 | 84 | 82 | 92 | 65 | 70 | 75 | 53 | 53 |
| Molding cooling period (s) | | 35 | 40 | 40 | 35 | 45 | 40 | 45 | 35 | 70 | 60 | 30 | ≥100 | ≥100 |

| | | | | | | | | | | | | | | |
|---|---|---|---|---|---|---|---|---|---|---|---|---|---|---|
| PLA: Polylactic acid resin, PBS: Polybutylene succinate resin PL-019: Glycerin diacetomonocaprate, PL-710: Polyglycerin acetate ATBC: Acetyl tributylcitrate, BXA: Bis(butyl diglycol) adipate PERBUTYL D: Di-t-butyl peroxide PDE-50: Polyethylene glycol dimethacrylate | | | | | | | | | | | | | | |

As apparent from Table 1, the resin compositions prepared in Examples 1 to 8 were proper in distortion temperature under load and molding cooling period.

Example 5, in which the proportion of the peroxide was greater than in Example 1 and no crosslinking assist agent was added, was lower in crosslinking efficiency and hence slightly lower in distortion temperature under load, and required a slightly longer cooling period.

On the other hand, Comparative Examples 1 and 2, in which the amount of the plasticizer was too small below the range specified by the present invention, were lower in distortion temperature under load, and each required a longer cooling period. Comparative Example 3, in which the amount of the plasticizer is too great above the range specified by the present invention, was lower in distortion temperature under load. Comparative Examples 4 and 5, in which no peroxide was added, were lower in distortion temperature under load, and were poor in demoldability even after a cooling period of 100 seconds.

## Claims

1. A polyester resin composition prepared from a material comprising 100 parts by mass of a resin compound containing 90 to 99.5% by mass of a biodegradable polyester resin and 10 to 0.5% by mass of a plasticizer, and 0.01 to 10 parts by mass of a peroxide.

2. A polyester resin composition as set forth in claim 1, wherein the material further comprises 0. 01 to 5 parts by mass of a crosslinking assist agent.

3. A polyester resin composition as set forth in claim 1, wherein the biodegradable polyester resin mainly comprises a polylactic acid.

4. A polyester resin composition as set forth in claim 1, wherein the plasticizer is at least one compound selected from the group consisting of an aliphatic polycarboxylate derivative, an aliphatic polyalcohol ester derivative, an aliphatic oxyester derivative, an aliphatic polyether derivative and an aliphatic polyether polycarboxylate derivative.

5. A polyester resin composition as set forth in claim 2, wherein the crosslinking assist agent is a (meth)acrylate compound.

6. A polyester resin composition as set forth in claim 1, wherein the biodegradable polyester resin is a biodegradable polyester resin prepared from a plant-based material.

7. A product produced from a polyester resin composition as recited in any one of claims 1 to 6.
